# EUROPEAN PATENT SPECIFICATION

(11) **EP 0 979 616 B1**
(45) Date of publication and mention of the grant of the patent: **23.07.2003**
(21) Application number: 98500193.2
(22) Date of filing: 13.08.1998
(51) Int. Cl.: A23L 1/333, A23L 1/325

(54) **Process to obtain a squid substitute and the product so obtained**
Verfahren zur Herstellung von einem Tintenfischersatz und hergestelltes Produkt
Procédé pour obtenir un succédané de calmar et produit obtenu

(43) Date of publication of application: 16.02.2000
(73) Proprietor: VDA.E HIJOS DE JERONIMO IZAGUIRRE, S.L., 20170 AGINAGA (Gipuzkoa) (ES)
(72) Inventor: Garcia Palacios, Irene Fundacion Azti, 48395 Sukarrieta (Bizkaia) (ES); Perez Villarreal, Begona Fundacion Azti, 48395 Sukarrieta (Bizkaia) (ES)
(74) Representative: Perez Bonal, Bernardo

(56) References cited:
- EP-A- 0 234 012
- EP-A- 0 494 318
- US-A- 4 362 752
- DATABASE WPI Section Ch, Week 9027 Derwent Publications Ltd., London, GB; Class D12, AN 90-203338 XP002090256 -& ES 2 013 965 A (ANGULAS AGUINAGA SA) , 1 June 1990
- DATABASE WPI Section Ch, Week 9409 Derwent Publications Ltd., London, GB; Class D13, AN 94-067680 XP002090257 -& ES 2 046 953 A (CONSEJO SUPERIOR INVESTIGACION), 1 February 1994

## Description

### OBJECT OF THE INVENTION

The invention hereby proposed consists of a process for obtaining a squid substitute and the product so obtained, to be applied in the food industry and which is destined to obtain a product imitating a squid regarding its organoleptic characteristics in shape, structure and consistency (Loligo sp).

### BACKGROUND OF THE INVENTION

Currently, a number of substitutes of fish or shellfish are commercialized, basically manufactured from surimi, the Japanese term for which the minced, washed and rinsed fish muscle is known as, with a water content similar to the original product, to which different additives are incorporated to assure optimum conservation in the frozen state.

Besides having an excellent stability in the frozen state, its main characteristic is its gel forming capacity, being able to acquire a wide range of textures, according to the thermal treatment applied, a property which has been and is being taken advantage of to prepare different products, such as crab leg, lobster tail, prawn tail, "crab claw", elfin, fresh anchovy steak and mantle of cephalopod substitutes, etc.

In the Spanish patent No. 0552332, the manufacturing process of reconstituted squid is described as from cephalopod. Initially, the non-edible parts are eliminated and the rest washed and minced. The edible parts are mixed together until obtaining a mass which is fed to a ring forming machine.

Likewise, the Spanish patent No. 2 013 965 may be mentioned, regarding the manufacturing process of a substitute for squid muscle and the product so obtained. The procedure starts with surimi, which is minced, then sodium chloride is added and a mixture homogenized. Then, some or several of the following ingredients are added: starch, water, egg white, vegetal oil or soya protein, then homogenized. The mass obtained is molded and/or extruded, finally subjecting it to a thermal treatment.

In the Spanish patent No. 2 046 953, a food product substitute of cephalopod mantle and its manufacturing process is described. Said product consists of 80-95% mantle of "pota", which is homogenized with 1-3% by weight of common salt. Then, carrageenates and one or several of the following ingredients are added: calcium salt, potassium salt, starch, egg albumin and soya protein, followed by homogenization. Then, the mass is molded (as rings or open mantle) and, if desired with skin, the mass is treated in a first bath with sodium alginate, followed by another of calcium chloride. The product is subjected to a thermal treatment between 110-250°C for a variable time. It may be battered or not, and frozen or refrigerated.

The applicant ignores the existence of squid substitutes with the characteristics hereby described.

### DESCRIPTION OF THE INVENTION

The invention is presented in independent product claim 6 and in independent method claim 1.

The invention, object of this specification, refers to a procedure permitting a food product, similar to squid (Loligo sp) to be obtained, and which may presented in two different sizes: small (Tximino-Txiki) and medium (Bira-Bira), both of them of large scale consumption in the Basque Country. It is a mollusc characterized for having converted the edges of the feet in the peribuccal appendices which surround the head, modifying the rest of the food in the shape of a muscular funnel and whose capture is made in Cantabrian waters.

In the case of a small squid, said substitute consists of a foot with a head, and in the case of a medium squid, it only consists of a foot. The process, purpose of the invention, permits to obtain a product which is characterized in that it presents in a gelatinous state a great similarity to a natura squid, both in its external appearance (shape, color and appearance) and in flavor, texture and consistency. Said product is prepared as from minced giant squid muscle, surimi or a mixture of both, incorporating other ingredients, such as starch, cereal fibre, albumin, carrageenates, alginates, sugar, flavoring and natural colors as claimed.

Minced giant squid muscle, surimi or the mixture of both, constitute one of the basic components in the process to obtain the squid substitute and whose content varies 35-78%, to which is added salt (NaCl or KCl), with the purpose of solubilizing the miofibrilar proteins, at 2-5% over the total mass.

Likewise, the process object of this invention, incorporates cereal fiber at a percentage between 1-6% by weight over the body mass obtained. Said fiber improves the texture, with a reinforcing effect having a high water retention capacity, hence permitting a homogenous distribution thereof and in turn, offering a stabilizing and emulsifying effect, reducing work difficulties.

For the squid substitute to have the texture and aroma conditions typical of squid, it should contain other ingredients like water, starch, sugar, flavoring and natural colors, whose proportion varies according to the quality of the basic raw material (minced giant squid muscle, surimi or a mixture of both) as set forth in the claims.

To obtain the product object of the invention, the basic raw material is minced at a temperature no greater than 15°C and common salt is added at a level of 2 to 5% by weight over the total mass, being homogenized for a variable period of time, according to the raw material used and the evolution of the mass temperature. Homogenization thereof is carried out in a vacuum and at a temperature between 0°C and 15°C. Then, without stopping the mincing, the remaining ingredients are added in a determined order.

First, starch (0-10%) is added together with water (10-30%) and the hydrated cereal fiber (1-6%). Once the suitable temperature is reached, sugar is added (0-3%) together with the texturizing agents (egg albumin 0-4%, carrageenates 0-5% and alginates 0-3%). Finally, the flavoring agents are added (0.1-0.5%), oil (0.1-3%) and colors (0.1%).

Finally, a homogeneous mass is obtained, of a clear color with a temperature between 3-15°C, then being extruded and/or molded to obtain the tronco-conical shape with bilateral projections (fins) characteristic of the natural product.

Then, the product is gelatinized and stabilized, to be submitted to thermal treatment at a temperature of 60-100°C, producing coagulation of the proteins. The stabilization process takes place by means of dry or moist heat, at a temperature between 10-50°C and with a variable duration of 1 to 15 minutes.

The squid substitute obtained is packed and subjected to a conservation process by refrigeration, freezing and/or pasteurization and/or sanitation.

To shape this product, an extruding and/or molding machine is used designed for the purpose pursued and coupled to a continuous line, permitting thermal treatment and packing.

### DESCRIPTION OF THE DRAWINGS

To facilitate the understanding of the characteristics of the invention, the present specification is accompanied, by a drawing:

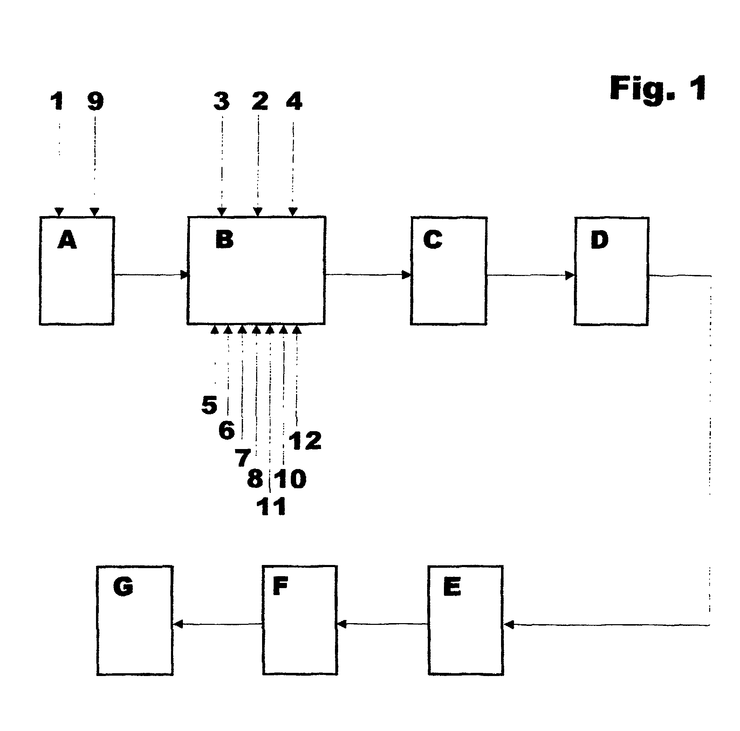

Figure 1 shows a diagram showing the consecutive phases of this invention, identified with letters, as well as the components integrating the squid substitute, which are expressed with numbers.

### PREFERRED EMBODIMENT OF THE INVENTION

In the light of that already described, this invention refers to a process to obtain a squid substitute and a product so obtained, identical to squid regarding its organoleptic characteristics, structure and consistency, and with a protein content between 55% and 80%, as from the following raw materials:
- Minced giant squid muscle, surimi or a mixture of both.
- Water.
- Starch.
- Cereal fiber.
- Carrageenates.
- Alginates.
- Sugar.
- Egg albumin.
- Salt.
- Oil.
- Flavoring.
- Natural colors.

The technological process to obtain squid (Loligo sp) substitute consists of the following phases:
A.- Preparation of the fish homogenate (minced giant squid muscle, surimi or a mixture of both and salt).
B.- Preparation of the remaining ingredients.
C.- Preparation of a homogeneous mass.
D.- Shaping of the squid substitute body.
E.- Gel formation and stabilization.
F.- Packing.
G.- Freezing and/or pasteurization, followed by refrigerated storage and/or sanitation.

### A.- Preparation of the Fish Homogenate

The preparation process of the fish homogenate includes a first desuperheated phase of the frozen giant squid muscle and/or surimi, until a temperature between -10°C and 0°C, followed by mincing in a vacuum mincer, to which is added 2-5% salt by weight over the total mass. The mincing of these ingredients continues until the mass reaches a temperature between -6°C and 5°C.

### B.- Preparation of the Remaining Ingredients

The cereal fiber is weighed at a proportion of 1-6% over the final mass and is hydrated in water. The water represents 10-30% over the total mass. The starch incorporated in the formulation is present at a proportion of 0-10%.

The remaining ingredients as powders, such as the sugar, egg albumin, carrageenates, alginates are weighed separately, representing over the total mass 0-3%, 0-4%, 0-5% and 0-3%, respectively. Finally, the flavoring agents are weighed (0.1-0.5%), as well as the oil (0.1-3%) and colors (0-1%).

### C.- Preparation of the Homogeneous Mass

Without stopping the mincing and once the fish homogenate has reached the suitable temperature indicated above, starch, water and hydrated cereal fiber are added, proceeding to the temperature increase of the mass. Then, the remaining ingredients are added: sugar, albumin, carrageenates, alginates, flavoring agents and colors.

Mincing continues until obtaining a homogeneous mass, whose final temperature should never be less than 15°C.

### D.- Shaping of the Squid Substitute Body.

The shaping of the tronco-conical bodies or mantles with bilateral projections of the squid substitute is produced by extruding and/or molding the mass, being fed to the shaping machine thereof.

### E. Gel Formation and Stabilization.

The bodies already shaped gelify by means of thermal treatment at a temperature of 60-100°C, for a variable time, resulting in the coagulation of the proteins. Gel stabilization is produced by means of dry or moist heat at a temperature between 10-50°C, with a variable duration of 1 to 15 minutes.

### F.- Packing.

The squid substitute obtained is introduced into plastic or metallic containers to finally being subjected to a conservation process (freezing and/or pasteurization and/or sanitation).

### G.- Freezing and/or Pasteurization with Refrigerated Storage and/or Sanitation

The already packed product may be conserved in a frozen state, for which it is submitted to a freezing process, by means of a tunnel, reaching a temperature less than -21°C ± 3°C, being stored in a freezing chamber until its dispatch.

Likewise, it may be conserved by pasteurizing and refrigerating, by means of applying a thermal treatment between 65-105°C during a variable time between 20 minutes and 2 hours, with later storage under cooling conditions (3+2°C).

The conservation of the product by means of applying the sanitation treatment involves the product being submitted to temperatures between 105-127°C for a variable time of 20 minutes to 2 hours, finally being stored at room temperature conditions.

### Example 1

| | |
|---|---|
| - Giant squid muscle: | 30 g |
| - Surimi | 45 g |
| - Water | 15 g |
| - Cereal fiber | 2 g |
| - Salt | 2 g |
| - Egg albumin | 2 g |
| - Carrageenates | 3 g |
| - Sugar | 0.7 g |
| - Oil | 2.0 g |
| - Flavoring agents | 0.3 g |

The product is manufactured as follows:
- The giant squid muscle and surimi is desuperheated.
- Both are minced together with salt in a cutter for 10 minutes.
- The cereal fiber and water are added and homogenized for 5 minutes.
- The egg albumin, carrageenates and sugar are added and homogenized for 3 minutes. The flavoring agents are added and the mass is homogenized another two minutes.
- The mass is given the shape of a squid by means of extrusion/molding.
- The mass is subjected to a thermal treatment to achieve gel formation and then, stabilized with dry and/or moist air.
- The product is introduced in a plastic container.
- The product is frozen in a tunnel and stored under freezing conditions.

### Example 2

| Composition per 100 g product: | |
|---|---|
| Giant squid muscle | 70 g |
| Water | 15 g |
| Cereal fiber | 2 g |
| Salt | 2 g |
| Starch | 5 g |
| Alginates | 2 g |
| Egg albumin | 2 g |
| Carrageenates | 1 g |
| Sugar | 0.7 g |
| Flavoring agents | 0.3 g |

The manufacturing process for the product is the same as that described in the previous example.

## Claims

1. A process for obtaining a squid substitute, from among those procedures to obtain a squid substitutes as from a cephalopod and also those obtained from surimi, which once minced, washed and rinsed, receive different additives, wherein a product identical to squid is obtained, regarding organoleptic characteristics, shape, structure and consistency, having a protein content between 55% and 80% as from the following raw materials and contents, as a percentage of the final weight: minced giant squid muscle, surimi or mixture of both (1), from 35 to 78%; water (2), 10 to 30%; starch (3), 0 to 10%; cereal fiber (4), from 1 to 6%; carrageenates (5), 0 to 5%; alginates (6), 0 to 3%; sugar (7), 0 to 3%; egg albumin (8), 0 to 4%; salt (9), from 2 to 5%; oil (10), from 0.1 to 3%; flavoring additives (11), 0.1 to 0.5%; and natural colors (12), 0 to 1%, according to the following phases:
- Preparation of the fish homogenate (A).
- Preparation of the remaining ingredients (B).
- Preparation of the homogeneous mass (C).
- Shaping of the body of the squid substitute (D),
- Gel formation and stabilization (E).
- Packing (F).
- Freezing and/or pasteurization, with later refrigerated storage and/or sanitation. (G).

2. A process to obtain a squid substitute, according to the previous claim, **characterized in that** the preparation of the fish homogenate, whether minced giant squid or surimi or a mixture of both, is carried out in a vacuum mincer.

3. A process to obtain a squid substitute, according to previous claims, **characterized in that** the shaping of the body of the squid substitute is carried out by extrusion and/or molding of the mass.

4. A process to obtain a squid substitute, according to the previous claims, **characterized in that** the bodies of the squid substitutes, once shaped, gelify by means of thermal treatment at 60-100°C during a variable time, producing coagulation of the proteins.

5. A process to obtain a squid substitute, according to the previous claims, **characterized in that** the gel stabilization is produced by means of dry or moist heat, at a temperature between 10-50°C, with a variable duration of 1-15 minutes.

6. A squid substitute, according to the previous claims, obtainable from minced giant squid muscle, surimi or a mixture of both (1), from 35 to 78%; water (2), 10 to 30%; starch (3), 0 to 10%; cereal fiber (4), from 1 to 6%; carrageenates (5), 0 to 5%; alginates (6), from 0 to 3%; sugar (7), 0 to 3%; egg albumin (8), 0 to 4%; salt (9), from 2 to 5%; oil (10), 0.1 to 3%; flavoring additives (11), 0.1 to 0.5% and natural colors (12), 0 to 1%.

## Patentansprüche

1. Prozess zum Erlangen eines Kalmarersatzes, einer unter den bestehenden Verfahren zum Erlangen des Kalmarersatzes, sowie der anderer Zephalopoden, sowie des Ersatzes, den man aus Surimi erhält, dem nach dem Zerkleinern und dem wiederholten Auswaschen verschiedene Zusätze zugegeben werden, der **dadurch gekennzeichnet** wird, dass man ein dem Tintenfisch identisches Produkt, in Bezug auf dessen organoleptischen Merkmale, Form, Struktur und Konsistenz erhält, mit einem Eiweissanteil, der sich zwischen 55% und 80% der folgenden Rohstoffe und folgenden Inhalte bewegt, die in Prozent des Endgewichtes ausgedrückt sind: zerkleinerter Muskel des Riesenkalmares, Surimi oder Gemisch von beiden (1) von 35 bis 78%; Wasser (2) von 10 bis 30%; Stärke (3) von 0 bis 10%; Getreidefasern (4) von 1 bis 6%; Karrageene (5) von 0 bis 5%; Alginate (6) von 0 bis 3%; Zucker (7) von 0 bis 3%; Eiereiweiss (8) von 0 bis 4%; Salz (9) von 2 bis 5%; Öl (10) von 0,1 bis 3%; Aromazusätze (11) von 0,1 bis 0,5%; und naturliche Farbstoffe (12) von 0 bis 1%, gemäss nachfolgender Stufen:
• Vorbereitung der Homogenisierung des Fisches (A)
• Vorbereitung der restlichen Zutaten (B)
• Zubereitung der homogenen Masse (C)
• Formgebung des Körpers des Kalmarersatzes(D)
• Bildung von Gel und Stabilisierung (E)
• Verpackung (F)
• Einfrosten und/oder Pasteurisierung, mit anschliessender Lagerung in Kühlanlagen und/oder Hygienisierung (G).

2. Prozess zum Erlangen eines Kalmarersatzes nach dem vorhergehenden Anspruch, bei dem die Vorbereitung der Homogenisierung des Fisches, sei es zerkleinerter Riesenkalmar oder Surimi, oder ein Gemisch von beiden, in einem Fleischwolf in Vakuum durchgeführt wird.

3. Prozess zum Erlangen des Kalmarersatzes nach den vorhergehenden Ansprüchen, bei dem die Formgebung des Körpers des Kalmarersatzes mittels Extrusion und/oder Masseverformung bewirkt wird.

4. Prozess zum Erlangen des Kalmarersatzes nach den vorhergehenden Ansprüchen, bei dem die Körper des Kalmarersatzes, nach deren Formgebung, durch eine Wärmebehandlung bei 60-100°C innerhalb eines variablen Zeitraumes, bei der eine Koagulation der Eiweisse bewirkt wird, geliert werden.

5. Prozess zum Erlangen des Kalmarersatzes nach den vorhergehenden Ansprüchen, bei dem die Stabilisierung des Gels durch trockene oder feuchte Wärme, bei einer Temperatur, die sich zwischen 10 und 50°C bewegt und einer Dauer, die zwischen 1 und 15 Minuten liegt, bewirkt wird.

6. Kalmarersatz nach den vorhergehenden Ansprüchen, den man aus dem Muskel des Riesenkalmares, Surimi oder eines Gemisches von beiden (1) von 35 bis 78%; Wasser (2) von 10 bis 30%; Stärke (3) von 0 bis 10%; Getreidefasern (4) von 1 bis 6%; Karrageene (5) von 0 bis 5%; Alginate (6) von 0 bis 3%; Zucker (7) von 0 bis 3%; Eiereiweiss (8) von 0 bis 4%; Salz (9) von 2 bis 5%; Öl (10) von 0, 1 bis 3%; Aromazusätze (11) von 0,1 bis 0,5%; und natürlichen Farbstoffen (12) von 0 bis 1%, erlangt.

## Revendications

1. Procédé pour obtenir un succédané de calamar, parmi les procédés pour obtenir des succédanés de calamar, ainsi que d'autres céphalopodes, et comme ceux qui s'obtiennent à partir du surimi, qui, après avoir été émietté, lavé et rincé, reçoit différents additifs, **caractérisé en ce qu'**on obtient un produit identique au calamar en ce qui concerne les caractéristiques organoleptiques, de forme, de structure et de consistance, avec un contenu en protéines compris entre 55 et 80% sur les matières premières suivantes et les contenus suivants exprimés sous forme de pourcentage sur le poids final : muscle émietté de calamar géant, surimi ou un mélange des deux (1), 35 à 78% ; eau (2), 10 à 30% ; amidon (3), 0 à 10% ; fibre de céréales (4), 1 à 6% ; carragheenates (5), 0 à 5% ; alginates (6), 0 à 3% ; sucre (7), 0 à 3% ; albumine d'oeuf (8), 0 à 4% ; sel (9), 2 à 5% ; huile (10), 0,1 à 3% ; agents d'aromatisation (11), 0,1 à 0,5% ; colorants naturels (12), 0 à 1% ; selon les phases suivantes :
• Préparation du produit homogénéisé de poisson (A)
• Préparation des autres ingrédients (B)
• Préparation de la pâte homogène (C)
• Formation du corps du succédané de calamar (D)
• Formation de gel et stabilisation (E)
• Emballage (F)
• Congélation et/ou pasteurisation, puis stockage à froid et/ou hygiénisation (G).

2. Procédé pour obtenir un succédané de calamar, selon la revendication précédente, dans lequel la préparation du produit homogénéisé de poisson, soit du calamar géant émietté, soit du surimi ou un mélange des deux a lieu dans un hachoir à viande sous vide.

3. Procédé pour obtenir un succédané de calamar, selon les revendications précédentes, dans lequel la formation du corps du succédané de calamar a lieu par extrusion et/ou moulage de la pâte.

4. Procédé pour obtenir un succédané de calamar, selon les revendications précédentes, dans lequel les corps des succédanés de calamar sont gélifiés une fois qu'ils ont été mis en forme, à l'aide d'un traitement thermique à 60-100°C pendant une durée variable, ce qui a pour effet de coaguler les protéines.

5. Procédé pour obtenir un succédané de calamar, selon les revendications précédentes, dans lequel la stabilisation du gel a lieu à l'aide de chaleur sèche ou humide, à une température de 10 à 50°C, et dont la durée varie de 1 à 15 minutes.

6. Succédané de calamar, selon les revendications précédentes, pouvant être obtenu du muscle de calamar géant, du surimi ou du mélange des deux (1), 35 à 78% ; eau (2), 10 à 30% ; amidon (3), 0 à 10% ; fibre de céréales (4), 1 à 6% ; carragheenates (5), 0 à 5% ; alginates (6), 0 à 3% ; sucre (7), 0 à 3% ; albumine d'oeuf (8), 0 à 4% ; sel (9), 2 à 5% ; huile (10), 0,1 à 3% ; agents d'aromatisation (11), 0,1 à 0,5% ; colorants naturels (12), 0 à 1%.
